# EUROPÄISCHE PATENTANMELDUNG

(11) **EP 0 757 893 A1**
(43) Veröffentlichungstag der Anmeldung: **12.02.1997**
(21) Anmeldenummer: 95112526.9
(22) Anmeldetag: 09.08.1995
(51) Int. Cl.: A22C 21/00

(54) **Einrichtung zum Bearbeiten der Beine von Geflügel**

(71) Anmelder: NORDISCHER MASCHINENBAU RUD. BAADER GMBH + CO KG, D-23560 Lübeck (DE)
(72) Erfinder: Habenicht, Frank, D-23611 Sereetz (DE); Wagner, Wolfgang, D-23858 Reinfeld (DE); Wruck, Siegbert, D-18435 Stralsund (DE)

(57) **Zusammenfassung**

Es ist eine Einrichtung zum maschinellen Bearbeiten von Geflügelkörpern, insbesondere zum Trennen der Beine im Bereich des Kniegelenkes beschrieben. Die Einrichtung ist mit einem Förderer (1) zum Fördern und Halten der Beine in hängender Anordnung, sowie mit Stützmitteln (2) in Form einer mit Rezessen (2.2) an ihrem Umfang versehenen, synchron mit dem Förderer (1) umlaufenden Stützscheibe (2.1) und mit Trennmitteln (4) in Form eines Kreismessers (4.1) ausgestattet. Die Beine werden in die Rezesse (2.2) geleitet und durch einen von außen wirksamen Andruckförderer (3) gegen die Stützscheibe (2.1) gedrängt, so daß eine Abstützung im Bereich des Kniegelenkes erfolgt. Der Andruck bewirkt eine verstärkte Abwinkelung des Kniegelenkes und damit Straffung der Sehnen, Häute und Muskelfasern, in welchem Zustand der Trennschnitt durch die Trennmittel (4) durchgeführt wird.

## Beschreibung

Die Erfindung geht aus von einer Einrichtung zum maschinellen Bearbeiten von Geflügelkörpern oder Teilen derselben, insbesondere zum Trennen der Beine im Bereich des Kniegelenkes, umfassend einen angetriebenen Förderer zum Halten und Fördern der Beine in hängender Anordnung, sowie Stützmittel zum Stützen und Trennmittel zum Trennen der Beine im Bereich des Kniegelenkes.

Eine derartige Bearbeitung hat das Ziel, dem Markt Teilstücke zur Verfügung zu stellen, die sich durch individuelle Behandlung zu unterschiedlichen Produkten verarbeiten lassen. So ist der als "Drumstick" bekannte Unterschenkel des Geflügels als Imbiß beliebt, während der Oberschenkel mit seiner vergleichsweise großen Fleischmenge eher für eine Gewinnung dieses Fleisches beispielsweise durch einen Entbeinungsprozeß geeignet ist.

Eine solche Einrichtung zum Trennen der Beine ist aus der US 4 896 399 bekannt. Bei dieser Einrichtung findet ein mit Schäkeln versehener und in horizontaler Ebene umlaufend angetriebener Förderer Verwendung, der um Umlenkräder endlos geführt ist. Auf der Achse eines der Umlenkräder und unterhalb desselben ist eine synchron mit dem Umlenkrad umlaufende Stützscheibe mit Rezessen an ihrem Umfang angeordnet, die unterhalb der Bahn der Schäkel und dieser synchron folgend umlaufen. Die Stützscheibe weist eine Radialnut auf, in die eine stationäre Messerklinge eintaucht.

Es ist die Aufgabe der Erfindung, die bekannte Einrichtung hinsichtlich Funktionssicherheit und Produktqualität zu verbessern.

Diese Aufgabe wird bei einer Einrichtung der eingangs beschriebenen Art erfindungsgemäß dadurch gelöst, daß dem Stützmittel ein begleitend angetriebener Andruckförderer zugeordnet ist.

In Verbindung mit einer Ausführung, bei der der Förderer mindestens bereichsweise auf einer Kreisbahn geführt und mit Schäkeln zum Halten der Beine an ihrem Knöchelgelenkkopf versehen ist, und der Stützförderer als dem Kreisbahnbereich konzentrisch zugeordnete Stützscheibe mit Rezessen an ihrem Umfang ausgebildet ist, wird die Aufgabe vorteilhaft dadurch gelöst, daß der Andruckförderer aus einem endlosen, der Stützscheibe zugeordneten Fördergurt besteht, wobei die Zuordnung derart ist, daß dessen Arbeitstrum unmittelbar unterhalb der Stützscheibe und zumindest bereichsweise in der Bahn der Rezesse derselben verläuft.

Die damit erzielbaren Vorteile bestehen insbesondere darin, daß die Beine sicher gefaßt und ohne Gefahr einer Verdrehung durch den Schneidvorgang durch den Schneidprozeß gebracht werden können, wobei die Möglichkeit einer gezielten Asynchronität zwischen dem Umlauf der Stützscheibe und des Andruckförderers in Verbindung mit der Verwendung eines Kreismessers und mindestens einer zusätzlichen vorbearbeitenden Messerklinge eine hohe Präzision der Schnittführung und damit Qualitätssteigerung der Schnittausführung ergeben.

Weitere vorteilhafte Ausführungen der erfindungsgemäßen Einrichtung sind den restlichen Unteransprüchen zu entnehmen.

Die Erfindung wird nachstehend anhand eines in der Zeichnung dargestellten Ausführungsbeispiels näher erläutert. Es zeigen
- Fig. 1: einen Ausschnitt aus einer Bearbeitungsanlage für die Zerlegung von Geflügelkörpern mit der erfindungsgemäßen Einrichtung in perspektivischer Ansicht vereinfacht dargestellt,
- Fig. 2: einen radialen Teilschnitt durch die Einrichtung längs der Schnittlinie II; und
- Fig. 3: eine Teildraufsicht auf die Einrichtung gemäß Fig. 1 mit einem zusätzlichen Trennmittel.

Die erfindungsmäße Einrichtung umfaßt ein nicht näher dargestelltes Maschinengestell mit einem Förderer 1 , einem Stützförderer 2 , einem Andruckförderer 3 sowie Trennmitteln 4 .

Der Förderer 1 ist als endloser Kettenförderer 1.1 ausgebildet, der die Gesamtanlage endlos geführt durchläuft. Die Führung erfolgt durch jeweils um eine senkrechte Achse umlaufende Umlenkräder, von denen lediglich ein Umlenkrad 1.2 mit einer Achse 1.3 gezeigt ist. Der Kettenförderer 1.1 ist mit in gleicher Teilung zueinander und hängend angeordneten Schäkeln 1.4 bestückt, die jeweils mit zwei in Förderrichtung hintereinander angeordneten Haltemitteln 1.5 versehen und im Umlenkbereich des Umlenkrades 1.2 verdrehsicher geführt sind.

Der Stützförderer 2 ist unterhalb der Bahn der Schäkel 1.4 angeordnet und besteht aus einer kreisflächigen, auf der Achse 1.3 konzentrisch befestigten Stützscheibe 2.1 . Die Stützscheibe 2.1 ist an ihrem Umfang mit Rezessen 2.2 versehen, die durch im wesentlichen sägezahnartige Ausgestaltung des Umfanges der Stützscheibe 2.1 gebildet sind, wobei die in Drehrichtung vorauslaufende Flanke 2.3 radial ausgerichtet ist. Die Teilung der Rezesse 2.2 entspricht dem gegenseitigen Abstand der Haltemittel 1.5 der Schäkel 1.4 bzw. der Teilung der Schäkel 1.4 zueinander. Dabei laufen die Rezesse 2.2 auf einem Umlaufradius um, der demjenigen der Haltemittel 1.5 der Schäkel 1.4 entspricht. Die Stützscheibe 2.1 ist weiter an ihrem Umfang mit einer Radialnut 2.4 versehen, die bis in den Grund der Rezesse 2.2 reicht, so daß die Stützscheibe 2.1 an ihrer Peripherie als Doppelscheibe mit einem Trennspalt erscheint.

Der Andruckförderer 3 besteht aus einem endlosen, mit Formstücken 3.2 besetzten Fördergurt 3.1 und ist in einer zu der Umlaufebene der Stützscheibe 2.1 parallelen und unmittelbar unterhalb derselben befindlichen Ebene durch Umlenkrollen 3.3 und 3.4 geführt und umlaufend angetrieben. Dabei ist der Arbeitstrum 3.5 der Achse 1.3 der Stützscheibe 2.1 zugewandt und durch eine Führungsschiene 3.6 auf einem Teil seiner Erstreckung konzentrisch zu der Achse 1.3 geführt, wobei die Formstücke 3.2 die Führungsschiene 3.6 übergreifen. Der Andruckförderer 3 ist um die gleichzeitig als Antriebsachse benutzte Achse 3.7 der Umlenkrolle 3.3 schwenkbar gelagert und gegen eine nicht gezeigte Feder von der Stützscheibe 2.1 weg verdrängbar.

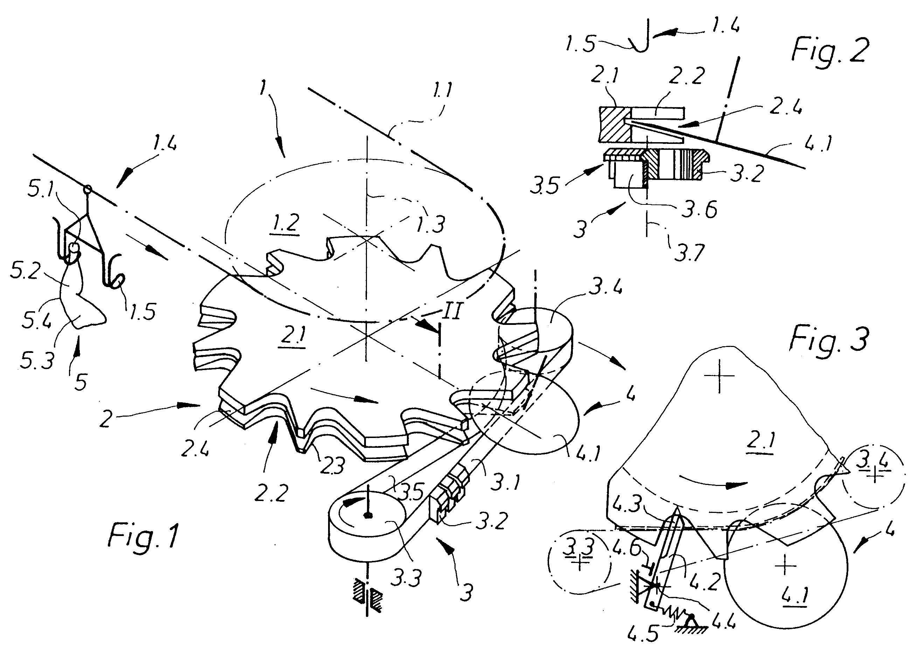

Die Trennmittel 4 bestehen aus einem umlaufend angetriebenen Kreismesser 4.1 welches, wie am besten aus Fig. 2 ersichtlich in einer zu der Umlaufebene der Stützscheibe 2.1 geneigten Ebene umläuft und in die Radialnut 2.4 in der Peripherie der Stützscheibe 2.1 hineinragt. Dem Kreismesser 4.1 ist entsprechend Fig. 3 eine in dessen Ebene wirksame Messerklinge 4.2 vorgeschaltet, die in Grundstellung mit ihrer Schneide 4.3 etwa radial zur Stützscheibe 2.1 ausgerichtet ist und wie das Kreismesser 4.1 in die Radialnut 2.4 der Stützscheibe 2.1 hineinragt. Die Messerklinge 4.2 weist mit ihrer Schneide 4.3 gegen die Drehrichtung der Stützscheibe 2.1 und ist um die Achse 4.4 schwenkbar gelagert. Die Messerklinge 4.2 wird durch eine Zugfeder 4.5 gegen die Drehrichtung der Stützscheibe 2.1 gegen einen Anschlag 4.6 gehalten.

Nachstehend ist die Wirkungsweise der erfindungsgemäßen Einrichtung beschrieben, wobei davon ausgegangen ist, daß die Einrichtung in eine Gesamtanlage integriert ist, deren Förderer 1 die zu bearbeitenden Beine 5 mit ihren Knöchelgelenkköpfen 5.1 an Schäkeln 1.4 hängend und mit dem Kniegelenk 5.4 nach außen heranführt. Beim Eintritt in den Wirkbereich der Einrichtung gelangen die Schäkel 1.4 in den Umlenkbereich des Förderers 1, wobei die Beine 5 in den Rezessen 2.2 der Stützscheibe 2.1 plaziert und in einer Kreisbahn geführt werden. Dabei erfolgt die Übernahme durch die Stützscheibe 2.1 so, daß das Kniegelenk 5.4 jeweils etwa in der Höhe der Radialnut 2.4 der Stützscheibe 2.1 zu liegen kommt. Im Fortgang der Förderbewegung gelangen die Beine 5 mit ihrem Oberschenkel 5.3 in den Bereich des Andruckförderers 3 , der sie mit dem Arbeitstrum 3.5 gegen den Grund der Rezesse 2.2 drängt. Dabei ist der Federandruck so gewählt, daß der Oberschenkel 5.3 über die Unterkante des Rezeßgrundes gegenüber dem Unterschenkel 5.2 abgewinkelt und damit die Sehnen, Häute und Muskelfasern im äußeren Bereich des Kniegelenkes 5.4 gespannt werden. Die Beine 5 erreichen so die Messerklinge 4.2 , die nach seitlichem Anschnitt zunehmend aus der Bahn der Beine 5 verdrängt wird und dabei einen Rundschnitt vollführt, in den nachfolgend das Kreismesser 4.1 eintaucht und die vollständige Trennung bewerkstelligt wobei ein weiteres Abwinkeln des Beines und Öffnen des Kniegelenkes durch den Druck des Andruckförderers 3. Während die Oberschenkel 5.3 an dieser Stelle durch geeignete Mittel aufgefangen werden, verbleiben die Unterschenkel 5.2 in den Schäkeln 1.4 und können später aus diesen ausgeworfen werden.

Für eine Anpassung der Einrichtung an unterschiedliche produktseitige Erfordernisse, insbesondere Proportionsveränderungen, ist eine Versteilmöglichkeit vorgesehen, mit der die Stützscheibe 2.1 , der Andruckförderer 3 und die Trennmittel 4 als Einheit im Sinne einer Abstandänderung zu der Bahn der Schäkel 1.4 verstellbar ist. Auch ist eine Verstellung des Andruckförderers 3 bezüglich des Abstandes seiner Umlaufebene zu der Unterseite der Stützscheibe 2.1 möglich, womit wie durch eine Verstellbarkeit des Federandruckes der Biegewinkel zwischen Unterschenkel 5.2 und Oberschenkel 5.3 beeinflußt werden kann. Schließlich wird mit einer von der Umlaufgeschwindigkeit der Stützscheibe 2.1 abweichenden Umlaufgeschwindigkeit des Andruckförderers 3 erreicht, daß der Oberschenkel 5.3 gegenüber dem Unterschenkel 5.2 während des Schnittes verdreht wird wodurch das Öffnen des Kniegelenkes begünstigt wird, so daß ein "anatomischer" Schnitt, d. h. eine Schnittführung in den Gelenkzwischenräumen mit größerer Sicherheit erreicht wird.

### Bezugszeichenliste

- **1**: **Förderer**
- 1.1: Kettenförderer
- 1.2: Umlenkrad
- 1.3: Achse
- 1.4: Schäkel
- 1.5: Haltemittel
- **2**: **Stützförderer**
- 2.1: Stützscheibe
- 2.2: Rezeß
- 2.3: Flanke
- 2.4: Radialnut
- **3**: **Andruckförderer**
- 3.1: Fördergurt
- 3.2: Formstück
- 3.3: Umlenkrolle
- 3.4: Umlenkrolle
- 3.5: Arbeitstrum
- 3.6: Führungsschiene
- 3.7: Achse
- **4**: **Trennmittel**
- 4.1: Kreismesser
- 4.2: Messerklinge
- 4.3: Schneide
- 4.4: Achse
- 4.5: Zugfeder
- 4.6: Anschlag
- **5**: **Bein**
- 5.1: Knöchelgelenkkopf
- 5.2: Unterschenkel
- 5.3: Oberschenkel
- 5.4: Kniegelenk

## Patentansprüche

1. Einrichtung zum maschinellen Bearbeiten von Geflügelkörpern oder Teilen derselben, insbesondere zum Trennen der Beine (5) im Bereich des Kniegelenkes, umfassend einen angetriebenen Förderer (1) zum Halten und Fördern der Beine in hängender Anordnung, sowie Stützmittel (2) zum Stützen und Schneidmittel (4) zum Trennen der Beine im Bereich des Kniegelenkes, **dadurch gekennzeichnet,** daß dem Stützmittel (2) ein begleitend angetriebener Andruckförderer (3) zugeordnet ist.

2. Einrichtung nach Anspruch 1 , wobei der Förderer (1) mindestens bereichsweise auf einer Kreisbahn geführt und mit Schäkeln (1.4) zum Halten der Beine (5) an ihrem Knöchelgelenkkopf (5.1) versehen ist, und der Stützförderer (2) als dem Kreisbahnbereich konzentrisch zugeordnete Stützscheibe (2.1) mit Rezessen (2.2) an ihrem Umfang ausgebildet ist, **dadurch gekennzeichnet,** daß der Andruckförderer (3) aus einem endlosen, der Stützscheibe (2.1) zugeordneten Fördergurt (3.1) besteht, wobei die Zuordnung derart ist, daß dessen Arbeitstrum unmittelbar unterhalb der Stützscheibe (2.1) und zumindest bereichsweise in der Bahn der Rezesse (2.2) derselben verläuft.

3. Einrichtung nach Anspruch 1 oder 2 , **dadurch gekennzeichnet,** daß mindestens der Arbeitstrum (3.5) des Fördergurtes (3.1) radial zur Stützscheibe (2.1) federnd ausweichbar angeordnet ist.

4. Einrichtung nach einem der Ansprüche 1 bis 3 , **dadurch gekennzeichnet,** daß der Andruckförderer (3) eine von der Umlaufgeschwindigkeit des Stützförderers (2) abweichende Fördergeschwindigkeit aufweist.

5. Einrichtung nach einem der Ansprüche 1 bis 4 , **dadurch gekennzeichnet,** daß die Stützscheibe (2.1) eine bis im wesentlichen in den Grund der Rezesse (2.2) reichende Radialnut (2.4) aufweist und die Trennmittel (4) in diese Nut (2.4) eintauchen.

6. Einrichtung nach Anspruch 5 , **dadurch gekennzeichnet,** daß die Trennmittel (4) aus einem angetriebenen Kreismesser (4.1) bestehen.

7. Einrichtung nach Anspruch 6 , **dadurch gekennzeichnet,** daß dem Kreismesser (4.1) mindestens eine in dessen Ebene wirksame Messerklinge (4.2) vorgeschaltet ist.

8. Einrichtung nach Anspruch 7 , **dadurch gekennzeichnet,** daß die Messerklinge (4.2) mit ihrer Schneide (4.3) den Förderpfad der Beine kreuzend und gegen Federkraft ausweichbar angeordnet ist.

9. Einrichtung nach einem der Ansprüche 5 bis 8 , **dadurch gekennzeichnet,** daß die Trennmittel (4) einzeln und gemeinsam im wesentlichen radial zur Stützscheibe (2.1) verstellbar sind.

10. Einrichtung nach einem der Ansprüche 5 bis 9 , **dadurch gekennzeichnet,** daß die Arbeitsebene der Trennmittel (4) zu der Umlaufebene der Stützscheibe (2.1) geneigt ist.

11. Einrichtung nach einem der Ansprüche 1 bis 10 , **dadurch gekennzeichnet,** daß die Stützscheibe (2.1), der Andruckförderer (3) und die Trennmittel (4) bezüglich des Abstandes zu dem Förderpfad gemeinsam verstellbar sind.
